# EUROPEAN PATENT APPLICATION

(11) **EP 3 351 500 A1**
(43) Date of publication of application: **25.07.2018**
(21) Application number: 17198624.3
(22) Date of filing: 26.10.2017
(51) Int. Cl.: B66B 13/26

(54) **MULTI-FUNCTIONAL ELEVATOR LIGHT CURTAIN**

(30) Priority: 07.09.2017 CN 201710802207
(71) Applicant: Ningbo Safety Electronic Co., Ltd, Xiapu, Beilun District Ningbo (CN)
(72) Inventor: WU, Jianbin, Ningbo (CN)
(74) Representative: De Anna, Pier Luigi

(57) **Abstract**

The invention discloses a multi-functional elevator light curtain, relates to the field of elevator accessory technology, the multi-functional elevator light curtain comprises a first detection unit (11) for detecting the plane where elevator car doors (22) are located, a second detection unit (12) for detecting the predetermined detection area (23) in front of the elevator car doors, a third detection unit (14) for detecting the distance between elevator car doors; wherein the first detection unit and second detection unit are used for multiply detecting if an object blocks the detection areas, and the third detection unit is used for further ensuring the safety operation of an elevator. The beneficial effects of the forgoing technical solutions are: achieving multiple detection mechanism for objects blocking, and further guaranteeing the closing and opening of the elevator door and safety operation of the elevator.

## Description

### CROSS-REFERENCE TO RELATED APPLICATIONS

The present application claims priority to and the benefit of Chinese Patent Application No. CN 201710802207.4 filed on September 7, 2017, the entire content of which is incorporated herein by reference.

### BACKGROUND OF THE INVENTION

### 1. Field of the Invention

The present invention relates to the technical field of elevator accessory, and more particularly, to a multi-function elevator light curtain.

### 2. Description of the Related Art

In conventional elevator car door detection system, generally, it only detects whether an object blocks the area in the plane where the elevator car doors are located, for example, a detection device consisting of an infrared transmitter and a receiver provided on both sides of the elevator car door is used to detect whether an object blocks the area in the plane of the elevator car doors. When no object blocks the area in the plane, the infrared light beam emitted from the infrared transmitter is received by the receiver, and then demodulated and amplified into the Microcontroller Unit (MCU) for processing, an optical signal is produced after processing and is sent to the control system of the elevator. However, when an object blocks the area in the plane, the infrared light beam emitted from the infrared transmitter cannot be received by the receiver, and the infrared light beam will be processed via MCU, then a shading signal is output to the control system of the elevator.

However, among the elevator usage scenarios, apart from the possibility that an object (for example, human body) blocks the area in the plane where the elevator car door is located, there is other possibility that an object (for example, human body) blocks the area in certain area in front of the elevator car door, for example, there is a scene where user is coming towards elevator door. If conventional elevator car door detection system is used, user under such usage scene cannot be detected correctly, whereby user may be hit by the door that is closing or other elevator-related accidents, thereby safety operation of elevator will not be guaranteed.

### SUMMARY OF THE INVENTION

In view of the above-mentioned problems existing in the prior art, the present invention provides a technical solution of a multi-functional elevator light curtain, which is intended to achieve multiple detection mechanism for detecting objects blocking, and further guarantee the closing and opening of the elevator door and safety operation of the elevator.

The above technical solution specifically comprises:
a multi-functional elevator light curtain applicable for elevator, comprises an elevator car and two elevator car doors provided in front of the elevator car, the elevator also connected to a control system for controlling the elevator car doors to open or to close according to the control signal, transmitted by the elevator car doors, showing whether the elevator car doors are closed; wherein the multi-functional elevator light curtain comprises a receiver and a transmitter mounted on opposite side of the elevator car door respectively, wherein the receiver covers one side of one of the elevator car doors, and the transmitter covers one side of other of the elevator car doors, the receiver is configured to be opposite to the transmitter, the multi-functional elevator light curtain further comprises:
   a first detection unit, for detecting whether an object is blocks a gap between the elevator car doors, and outputting a first detection signal when the object blocks the gap;
   said first detection unit further comprises 40 first infrared detection devices, each first infrared detection device respectively comprises a first infrared emitting tube provided in the transmitter, and a first infrared receiving tube provided in the receiver, the first infrared emitting tube continuously emits an infrared light beam towards the first infrared receiving tube;
   in the first detection unit, when the first infrared receiving tube of one of the first infrared detection devices does not receive the infrared light beam, the first detection unit outputs the first detection signal;
   a second detection unit, for detecting whether an object blocks an detection area in front of the elevator car doors, and outputting a second detection signal when the object blocks the detection area;
   said second detection unit further comprises a plurality of second infrared detection devices, each second infrared detection device respectively comprises a second infrared emitting tube provided in the transmitter, and a second infrared receiving tube provided in the receiver, the second infrared emitting tube and the second infrared receiving tube are arranged at a predetermined angle with respect to a plane of the elevator car doors respectively, and the second infrared emitting tube continuously emits the infrared light beam towards the detection area;
   in the second detection unit, when the second infrared receiving tubes of one of the second infrared detection devices receives the infrared light beam, the second detection unit outputs the second detection signal;
   an elevator car control unit connected to the first detection unit and the second detection unit respectively, when the first detection signal or the second detection signal is received by the elevator car control unit, the elevator car control unit controls the elevator car door to keep the elevator car door open;
   a third detection unit connected to the control system for detecting a distance between the elevator car doors in real time, and outputting a third detection signal when the distance is less than a first distance threshold value;
      the third detection unit further comprises:
         a pair of distance detection devices respectively mounted on the transmitter and receiver, a pair of bottom configurations between the distance detection devices parallel to the elevator car, and the pair of distance detection devices continuously detects the distance between the two elevator car doors and outputs a corresponding distance detection value;
         a control module connected to the distance detection device, the first distance threshold value is predetermined in the control module, wherein the control module is used for comparing the distance detection value with the first distance threshold value, and outputting a first comparison result;
         according to the first comparative result, the third detection unit transmits the third detection signal to the control system when the distance detection value is less than the first distance threshold value;
   when receiving the control signal indicating the elevator car doors have been closed and receiving the third detection signal, the control system controls the elevator to start running.

Preferably, the multi-functional elevator light curtain, wherein the first infrared emitting tube in each of the first infrared detection devices and the second infrared emitting tube in the corresponding second infrared detection device are integrated into the transmitter; and
the first infrared receiving tube in each of the first infrared detection devices and the second infrared receiving tube in the corresponding second infrared detection device are integrated into the receiver.

Preferably, the multi-functional elevator light curtain, wherein the first infrared emitting tube and the second infrared emitting tube are mounted in the transmitter by a PCB board, and
the first infrared receiving tube and the second infrared receiving tube are mounted in the receiver by a PCB board.

Preferably, the multi-functional elevator light curtain, wherein the predetermined angle is 45 degrees.

Preferably, the multi-functional elevator light curtain, wherein the first infrared emitting tube in each of the first infrared detection devices emits the infrared light beam towards the corresponding first infrared receiving tube at a predetermined scan period ;
within the predetermined scan period, the first infrared emitting tube continuously emits five infrared light beams.

Preferably, the multi-functional elevator light curtain, wherein the second detection unit comprises 18 second infrared detection devices.

Preferably, the multi-functional elevator light curtain, wherein two of the second infrared emitting tubes located in the upper portion of the transmitter emit an infrared light beam obliquely downward towards the detection area;
the 14 second infrared emitting tubes located in the central part of the transmitter horizontally emit the infrared light beam toward the detection area; and
the two second infrared emitting tubes located in the lower portion of the transmitter obliquely emit the infrared light beam upward towards said detection area.

Preferably, the multi-functional elevator light curtain, which further comprises:
an alarm unit, respectively connected to the first detection unit and the second detection unit, and the alarm unit is used for outputting an alarm signal after receiving the first detection signal or the second detection signal.

Preferably, the multi-functional elevator light curtain, wherein the alarm unit comprises indicator lights provided in the transmitter and receiver respectively;
the indicator light is illuminated by red light when the alarm unit receives the first detection signal or the second detection signal.

Preferably, the multi-functional elevator light curtain, which further comprises:
a detection control unit connected to the second detection unit and the third detection unit respectively;
a second distance threshold value is also predetermined in the control module of the third detection unit, wherein the control module is used for comparing the distance detection value with the second distance threshold value and outputting a second comparison result, and based on the second comparison result, the third detection unit sends a shutdown signal to the detection control unit when the distance detection value is less than the second distance threshold value;
wherein the detection control unit controls the second detection unit to stop running according to the shutdown signal;
wherein the second distance threshold value is greater than the first distance threshold value.

Preferably, the multi-functional elevator light curtain, wherein a distance threshold range is also predetermined in the control module of the third detection unit, wherein the control module is used for comparing the distance detection value with the distance threshold range and outputting a third comparison result;
based on the third comparison result, the detection control unit controls the second detection unit to operate when the distance detection value is within the distance threshold range.

Preferably, the multi-functional elevator light curtain, which further comprises:
a delay reset unit connected to the second detection unit; and
a timer configured in the delay reset unit, and timing begins when the second detection unit outputs the second detection signal, and after a predetermined period of time is passed, said delay reset unit controls the second detection unit to stop running.

Preferably, the multi-functional elevator light curtain, wherein the third detection unit and the control system are wirelessly connected via Bluetooth.

Preferably, the multi-functional elevator light curtain, which further comprises:
a indicating unit connected to the third detection unit, for illuminating by the red light after receiving the third detecting signal.

Preferably, the multi-functional elevator light curtain, wherein the third detection unit further comprises:
a self-learning module connected to the control module for self-learning to generate the first distance threshold value and being predetermined in the control module during the process of the elevator running several times after the initial installation of the multi-functional elevator light curtain;
during the process of the elevator running several times after the initial installation of the multi-functional elevator light curtain, the third detection unit stops transmitting the third detection signal to the control system.

The beneficial effects of the above technical proposal are: providing a multi-functional elevator light curtain which can achieve multiple detection mechanism for detecting objects blocking, and further guarantee the closing and opening of the elevator door and safety operation of the elevator.

### BRIEF DESCRIPTIONS OF THE DRAWINGS

The accompanying drawings, together with the specification, illustrate exemplary embodiments of the present disclosure, and, together with the description, serve to explain the principles of the present invention.
Figure 1 is a schematic representation of functional module of a multi-functional elevator light curtain in a preferred embodiment of the present invention;
Figure 2 is a schematic representation of a plurality of detection areas of a multi-functional elevator light curtain in a preferred embodiment of the present invention;
Figures 3-4 are schematic representations of assembly structure of a multi-functional elevator curtain in a preferred embodiment of the present invention;
Figure 5 is a schematic representation of the distribution of the optical path in the first detection unit in a preferred embodiment of the present invention;
Figures 6-8 are schematic representations of the arrangement of the second infrared emitting tube and the second infrared receiving tube at different positions of the second detection unit in a preferred embodiment of the present invention.

### DETAILED DESCRIPTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate; meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

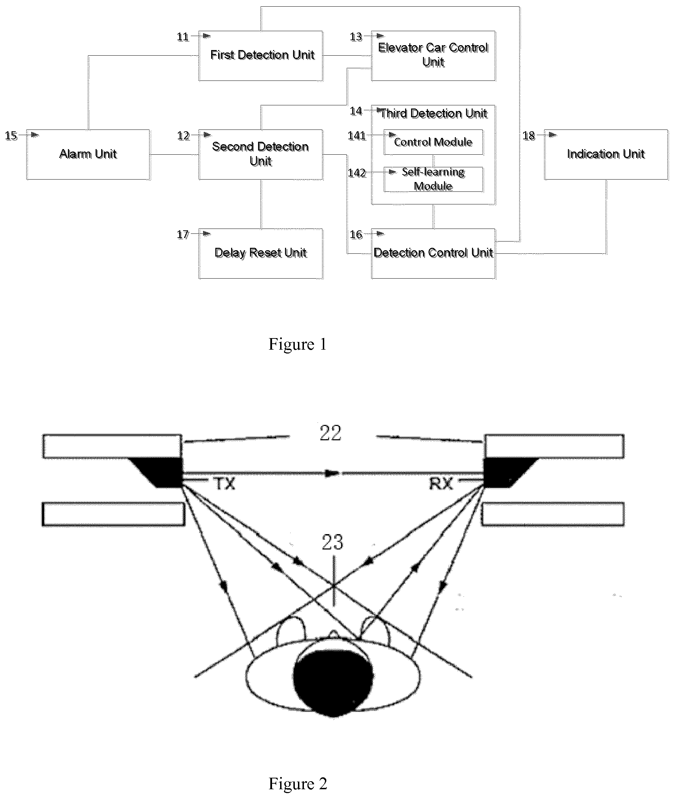

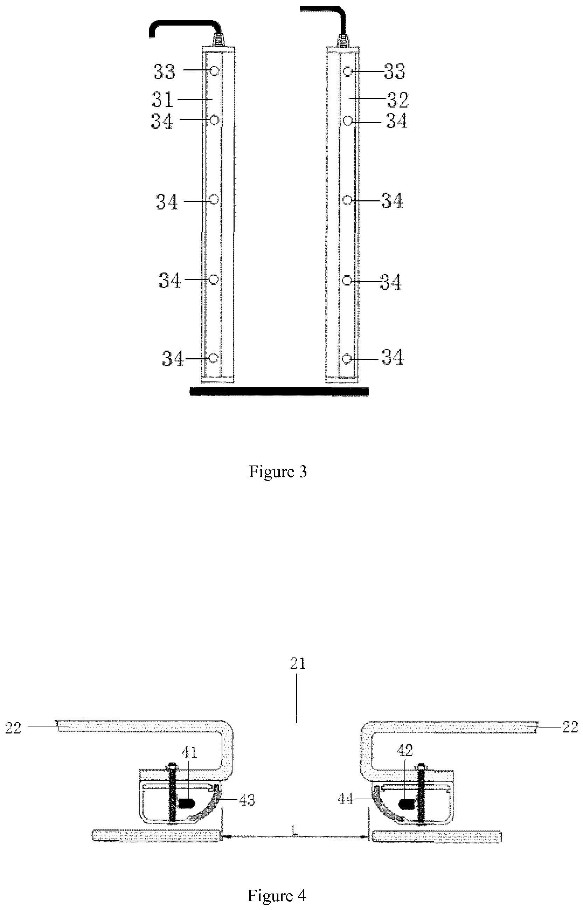

In view of the foregoing problems in the prior art, the present invention provides a multi-functional elevator light curtain which is applicable for an elevator. Specifically, the elevator comprises an elevator car 21 and two elevator car doors 22 provided in front of the elevator car 21(as shown in Figure 2 and 4). The elevator is also connected to a control system (not shown), wherein the control system is used for controlling the elevator car doors 22 to run or stop according to the control signal, transmitted by the elevator car doors 22, indicating whether the elevator car doors 22 are closed. Figure 3 shows the overall schematic representation of the multi-functional elevator light curtain.

In a preferred embodiment of the present invention, the multi-functional elevator comprises a transmitter 31 and a receiver 32 (shown in Figure 3) mounted on opposite sides of the two elevator car doors 22 respectively, wherein the transmitter 31 covers one side of one of the elevator car doors 22, and the receiver 32 covers one side of the other side of the elevator car doors 22, the receiver 32 is configured to be opposite to the transmitter 31. In the present embodiment, the transmitter 31 and receiver 32 may be fixed to each side of the elevator car doors 22 with screws respectively.

As shown in Figure 1-4, the multi-functional elevator light curtain further comprises:
a first detection unit 11, for detecting whether an object blocks a gap between the elevator car doors 22, and outputting a first detection signal when the object blocks the gap;
further, as shown in Figure 4, said first detection unit 11 further comprises 40 first infrared detection devices, each first infrared detection device respectively comprises a first infrared emitting tube 41 provided in the transmitter, and a first infrared receiving tube 42 provided in the receiver, the first infrared emitting tube 41 continuously emits an infrared light beam towards the first infrared receiving tube. Figure 4 only shows the configuration of an infrared detection device.

In the first detection unit 11, when the first infrared receiving tube 42 of one of the first infrared detection devices does not receive the infrared light beam, the first detection unit 11 outputs the first detection signal;
a second detection unit 12, for detecting whether an object blocks an detection area 23 in front of the elevator car doors (as shown in Figure 2), and outputting a second detection signal when the object blocks the detection area;
further still, as shown in Figure 4, said second detection unit 12 further comprises a plurality of second infrared detection devices, each second infrared detection device respectively comprises a second infrared emitting tube 43 provided in the transmitter, and a second infrared receiving tube 44 provided in the receiver, the second infrared emitting tube 43 and the second infrared receiving tube 44 are arranged at a predetermined angle with respect to the plane of the elevator car doors 22 respectively, and the second infrared emitting tube 43 continuously emits the infrared light beam towards the detection area;
in the second detection unit 12, when the second infrared receiving tube 44 of one of the second infrared detection devices does not receive the infrared light beam, the second detection unit outputs the second detection signal;
an elevator car door control unit 13 connected to a first detection unit 11 and a second detection unit 12 respectively, the elevator car door control unit 13 controls the elevator car doors 22 to keep it open when receiving the first detection signal or the second detection signal;
a third detection unit 14 connected to the control system, for detecting a distance between the elevator car doors in real time, and outputting a third detection signal when the distance is less than a first distance threshold value;
wherein the third detection unit 14 further comprises:
a pair of distance detection devices 33 respectively mounted on the transmitter and receiver, a pair of bottom configurations between the distance detection devices 33 parallel to the elevator car 21, and the pair of distance detection devices 33 continuously detects the distance between the two elevator car doors 22 and outputs a corresponding distance detection value;
a control module 141 connected to the distance detection device 33, the first distance threshold value is predetermined in the control module 141, wherein the control module 141 is used for comparing the distance detection value with the first distance threshold value, and outputting a first comparison result;
according to the first comparative result, the third detection unit 14 transmits the third detection signal to the control system when the distance detection value is less than the first distance threshold value; when receiving the control signal indicating the elevator car doors 22 have been closed and receiving the third detection signal, the control system controls the elevator to start running.

Specifically, in the present embodiment, the first detection unit 11 is responsible for detecting the plane where the elevator car doors are located, and it is determined whether an object blocks the area in the plane by observing whether the first infrared receiving tube can receive the infrared light beam emitted from the corresponding first infrared emitting tube. Specifically, as long as one infrared receiving tube cannot receive the infrared light beam, it is determined that an object blocks the area in the plane, then the first detection unit 11 will generate a first detection signal and output the first detection signal, thus the first detection signal is configured to indicate the presence of an object between the elevator car doors 22.

Further, in the present embodiment, the first detection unit 11 comprises 40 pairs of first infrared detection devices, and each pair of first infrared detection devices comprises an infrared emitting tube and an infrared receiving tube. In other words, the multi-functional elevator light curtain is provided with 40 pairs of the first infrared emitting tubes and receiving tubes, and a distance between the centers of light pipe of two of the first infrared emitting tubes is about 46.3 mm, and all the optical paths of the first infrared emitting tubes and receiving tubes are not parallel to the bottom of the elevator car, but emits/receives the infrared light beam at a certain oblique angle, thereby plane infrared light curtain can be formed to protect the plane area of the elevator car doors. The above arrangement allows the first detection unit 11 of the present invention to conform to the EN81-20 standards, and its detection accuracy is higher with respect to the plane detection light curtain conventionally having only 32 pairs of infrared emitting tubes and receiving tubes.

In the present embodiment, the second detection unit 12 is responsible for detecting whether an object blocks a predetermined detection area in front of the elevator car doors. Specifically, each of the second infrared emitting tubes 43 in the second detection unit 12 is responsible for emitting an infrared light beam toward the detection area, and the corresponding second infrared receiving tube 44 is provided for receiving the infrared light beam. The infrared light beam emitted from the second infrared emitting tube 43 will not be received by the second infrared receiving tube 44 in the case where no object blocks the detection region, and when an object blocks the detection area (as shown in Figure 2), the light beam emitted from the second infrared emitting tube 43 will be received by the second infrared receiving tube 44 via the refraction and reflection of object (e.g., the human body). As long as there is one second infrared receiving tube 44 receives the infrared light beam, the second detection unit 12 will output a corresponding second detection signal for indicating that the presence of an object blocking the detection area in front of the elevator car doors.

In the present embodiment, the elevator car door control unit 13 may be provided in the control system of the elevator, or may be provided separately on the elevator car doors 22, and the car door control unit 13 may achieve its function by a single chip microcomputer. Since the car door control unit 13 may be mounted in a controller inside the elevator car door, the specific mounting position of the car door control unit 13 is not shown in the drawings of the present invention.

The car door control unit 13 is configured to control the elevator car doors 22 according to the first detection signal and the second detection signal. Specifically, as long as the car door control unit 13 receives one of the first detection signal (for indicating the presence of object blocking the gap between the elevator car doors) and the second detection signal (for indicating the presence of an object blocking the detection area in front of the elevator car doors), and the car door control unit 13 controls the elevator car doors 22 to remain open to prevent the elevator car doors 22 from closing and from clamping the object.

In the present embodiment, the third detection unit 14 may comprises a pair of distance detection devices, such as distance sensors, which may likewise be implemented with an infrared emitting tube and an infrared receiving tube. The distance detection devices are mainly used for detecting the real-time distance between the two elevator car doors 22 and generating a distance detection value. The control module 141 in the third detection unit 14 compares the distance detection value with the predetermined first distance threshold value in the control module 141, and a first comparison result is obtained. The third detection unit 14 transmits a third detection signal to the control system of the elevator when the distance detection value is less than the first distance threshold value according to the first comparison result.

Specifically, in the prior art, the determination for the running or stop of the elevator is mainly based on whether the elevator car door is closed or not, and closing of the elevator car doors is determined mainly by observing whether the mechanical locking hook is connected in place. When the mechanical locking hook is connected in place, it can be determined that the elevator car doors have been closed, and the control system of the elevator controls the elevator to start running. However, in actual use, failure to judge the mechanical locking hook is connected or not may result in the control system of the elevator still receiving the closed control signal and starting running, thereby resulting in serious elevator accident when the elevator car door is not really closed. Therefore, in the present embodiment, the "double insurance" is used to ensure the safety operation of the elevator, that is to say, adding a process of distance judgment on the basis of the control signal transmitted after the mechanical locking hook is connected in place presently. When the distance between the two elevator car doors 22 is less than the predetermined first distance threshold value, it is determined that the elevator car doors 22 are currently in the closed state, and the third detection unit 14 transmits third detection signal to the control system of the elevator. And only when the control system of the elevator receives the control signal indicating the mechanical locking hook is connected in place and the third detection signal indicating the distance between the elevator car doors 22 is small enough simultaneously can the control system control the elevator to start running, thereby further avoiding elevator accident.

In a preferred embodiment of the present invention, the first infrared emitting tube in each of the first infrared detection devices and the second infrared emitting tube in the corresponding second infrared detection device are integrated into the transmitter; and the first infrared receiving tube in each of the first infrared detection devices and the second infrared receiving tube in the corresponding second infrared detection device are integrated into the receiver.

Specifically, in the present embodiment, as shown in Figure 3, the first infrared emitting tube 41 and the corresponding second infrared emitting tube 43 may be integrally mounted on a fixed structure 34 (for example, a fixed base) and provided on one side of the transmitter 31. Correspondingly, the first infrared receiving tube 42 and the corresponding second infrared receiving tube 44 may also be integrally mounted on a fixed structure (for example, a fixed base) and provided on one side of the receiver 32.

Further, the first infrared emitting tube 41, the first infrared receiving tube 42, the second infrared emitting tube 43, and the second infrared receiving tube 44 are fixed/mounted in the transmitter 31 and the receiver 32 through a PCB board. In other words, the fixed structure 34 may be a PCB board.

In a preferred embodiment of the present invention, the predetermined angle between the second infrared emitting tube 43 and the plane where the elevator car doors 22 are located is preferably at 45 degrees, and accordingly, the angle between the second infrared receiving pipe 44 and the plane where the elevator car doors 22 are located is also set at 45 degrees. Of course, the above predetermined angle can be changed according to the actual installation environment, for example, can be changed to 30 degrees or 60 degrees, etc., which will not be described further here.

In a preferred embodiment of the present invention, the first infrared emitting tube 41 in each of the first infrared detection devices emits the infrared light beam towards the corresponding first infrared receiving tube 42 at a predetermined scan period; within the predetermined scan period, the first infrared emitting tube continuously emits five infrared light beams.

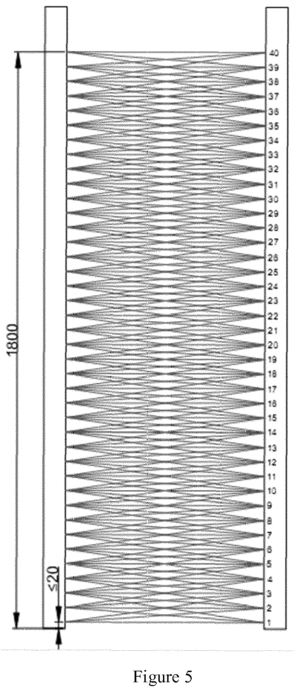

Specifically, in the present embodiment, within the predetermined scan period, the first infrared emitting tube 41 emits a total of 5 light beams outward, wherein the light beam with the highest height emitted from the first infrared emitting tube is greater than or equal to 1800mm, and the light beam with the lowest height is less than or equal to 20mm, and the light pipe works in the mode of 5 light beams cross scan, the predetermined scan period may be 1 second or 2 seconds, which will not be repeated here. Therefore, each of the first infrared receiving tubes 42 will receive 5 infrared light beams, and after ignoring the six useless infrared light beams with the highest or lowest heights, the total of 40 pairs of light tubes can produce 194 cross beams, which can help detect an object with the diameter of 50mm in any area of the plane where the elevator car doors are located. Thus the setting of the light pipe in the first detection unit 11 is in accordance with EN81-20 standards. The optical path distribution in the first detection unit 11 is shown in Figure 5.

In a preferred embodiment of the present invention, the second detection unit 14 comprises 18 second infrared detection devices. Specifically, 18 pairs of light tubes are provided in the second detection unit 14 for detecting whether an object blocks the detection area.

In a preferred embodiment of the present invention, two second infrared emitting tubes located in the upper portion of the transmitter emit an infrared light beam obliquely downward towards the detection area;
the 14 second infrared emitting tubes located in the central part of the transmitter emit the infrared light beams horizontally towards the detection area; and
two second infrared emitting tubes located in the lower portion of the transmitter emit the infrared light beams obliquely upward towards said detection area.

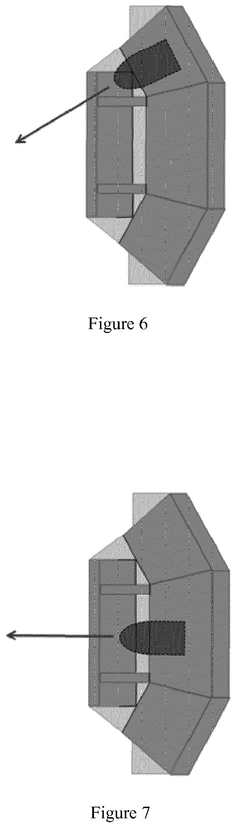

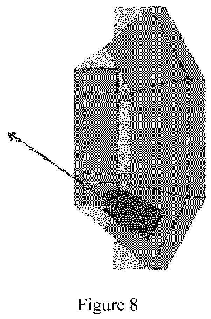

Specifically, in the present embodiment, in order to avoid ground reflection and increase the effectiveness of the light pipe detection, take the 18 pairs of light pipes (the combination of the second infrared emitting tube 43 and the corresponding second infrared receiving tube 44) provided in the second detection unit 14 as a example, wherein the 2 pairs of light pipes in the top obliquely downward emit and receive infrared light beams (as shown in Figure 6), the 14 pairs of light pipes in the central part horizontally emit and receive infrared light beams (as shown in Figure 7), and the 2 pairs of light pipes in the bottom obliquely upward emit and receive infrared light beams (as shown in Figure 8).

In a preferred embodiment of the present invention, as shown in Figure 1, the multi-functional elevator light curtain further comprises:
an alarm unit 15, respectively connected to the first detection unit 11 and the second detection unit12, and the alarm unit 15 is used for outputting an alarm signal after receiving the first detection signal or the second detection signal.

Further, in a preferred embodiment of the present invention, wherein the alarm unit 15 comprises indicator lights provided in the transmitter 31 and receiver 32 respectively (not shown in the figure); and
the indicator light is illuminated by red light when the alarm unit 15 receives the first detection signal or the second detection signal.

Specifically, in the present embodiment, the alarm unit 15 is the red and green indicator light of the elevator and the red and green indicator light is integrated into the multi-functional elevator curtain of the present invention. When an object blocks the area in the plane where the elevator car doors are located or an object blocks the detection area in front of the elevator car doors, the red and green indicator light is illuminated by red light to remind user to be careful. When no object blocks either areas, the red and green light is illuminated by green light to indicate the current operating environment of the elevator is safe, allowing waiting for the elevator car doors to get closed.

In a preferred embodiment of the present invention, as shown in the Figure 1, the multi-functional elevator light curtain further comprises:
a detection control unit 16, connected to the second detection unit 12 and the third detection unit 14 respectively;
wherein a second distance threshold value is also predetermined in the control module of the third detection unit 14, wherein the control module 141 is used for comparing the distance detection value with the second distance threshold value, and outputting a second comparison result, and based on the second comparison result, the third detection unit 14 sends a shutdown signal to the detection control unit 16 when the distance detection value is less than the second distance threshold value;
wherein the detection control unit 16 controls the second detection unit 12 to stop running according to the shutdown signal; and
the second distance threshold value is greater than the first distance threshold value.

Specifically, in the existing elevator structure, apart from the elevator car doors, there is also provided an elevator safety door on every floor. When the elevator car door is being closed gradually, the elevator safety door in corresponding floor will be closed simultaneously, so as to prevent user from getting into a running elevator by mistake. Therefore, when the elevator car doors 22 are being closed gradually, the external elevator safety door will gradually block the emission optical path from the second infrared emitting tube 43 in the second detection unit 12. In this case, a detection control unit 16 is provided for controlling the operating state of the second infrared emitting tube 43 in the second detection unit 12. Specifically, when the distance detection device in the third detection device 14 detects that the distance between the elevator car doors 22 is less than the second distance threshold value, the detection control unit 16 controls the second infrared emitting tube 43 in the second detection unit 12 to stop running.

In a preferred embodiment of the present invention, as shown in Figure 4, when the distance between the elevator car doors 22 is less than 400mm (that is, the second distance threshold value is set as 400mm), the detection control unit 16 controls to close all the second infrared emitting tubes 43.

Further, in a preferred embodiment of the present invention, the detection control unit 16 may likewise be used to adjust the transmission power of the second infrared emitting tube 43. For example, during the process that the elevator car doors 22 are closed from the maximum distance to the second distance threshold value, when the distance between the elevator car doors 22 is reduced gradually, the detection control unit 16 will gradually reduce the transmission power of the second infrared emitting tube 43 until the distance between the elevator car doors 22 is less than the second distance threshold value, thereby completely closing the second infrared emitting tube 43.

In a preferred embodiment of the present invention, similar to what is described hereinbefore; the detection control unit 16 can be connected to a first detection unit 11, and can also be used for adjusting the transmission power of the first infrared emitting tube 41 in the first detection control unit 11. Specifically, during the process that the elevator car doors 22 is closed from the maximum distance to the first distance threshold value, when the distance between the elevator car doors 22 is reduced gradually, the detection control unit 16 will gradually reduce the transmission power of the first infrared emitting tube 41 until the distance between the elevator car doors 22 is less than the first distance threshold value, thereby completely closing the first infrared emitting tube 41.

In a preferred embodiment of the present invention, a distance threshold value range is also predetermined in the control module 141 of the third detection unit 14, wherein the control module 141 is used for comparing the distance detection value with distance threshold range, and outputting a third comparison result; and
when the distance detection value is within the distance threshold range, the detection control unit 16 controls the second detection unit 12 to operate based on the third comparison result.

For example, when the distance threshold value range is 400-1200mm, that is to say, when the distance between the elevator car doors 22 is in the range of 400mm to 1200mm, the detection control unit 16 controls the second infrared emitting tube 43 in the second detection unit 12 to operate normally.

In a preferred embodiment of the present invention, the detection control unit 16 and the elevator car door control unit 13 may be integrated into a single chip microcomputer or they can be separated into a plurality of processing chips, which will not be described further here.

In a preferred embodiment of the present invention, as shown in the Figure 1, the multi-functional elevator light curtain further comprises:
a delay reset unit 17 connected to the second detection unit 12; and
a timer 171 configured in the delay reset unit 17, and timing begins when the second detection unit 12 outputs the second detection signal, and after a predetermined period of time is passed, said delay reset unit 17 controls the second detection unit 12 to stop running.

Specifically, when a personnel or an object stays in the elevator floor door area for a long time, the projection of the infrared light curtain is sustained, and the elevator will not close the door. In this case, if there is no delay reset function, the elevator will not run. Therefore, a timer 171 is provided in the delay reset unit 17 and the timing starts when the second detection unit 12 is triggered to output second detection signal. If the second detection unit 12 is still generating the second detection signal after the predetermined period of time is passed (for example, 10 seconds), it can be determined that the object will not enter into the elevator. Therefore, the delay reset unit 17 blocks the second detection unit 12, so as to make the elevator operate normally.

In a preferred embodiment of the present invention, the third detection unit 14 is wirelessly connected to the control system via Bluetooth.

Specifically, in the embodiment, in order to solve the problem of wiring complicated communication cable in a conventional elevator control system, the third detection unit 14 and control system can be connected via Bluetooth, and the third detection signal can be transmitted wirelessly via Bluetooth. Accordingly, the third detection unit 14 and control system can be connected in other wireless transmission mode, for example, Zigbee technology or wifi technology, to transmit the third detection signal, which will not be described further here.

In a preferred embodiment of the present invention, as shown in the Figure 1, the multi-functional elevator light curtain further comprises:
a indication unit 18 connected to a third detection unit 14, for illuminating by the red light after receiving a third detection signal.

Specifically, in the present embodiment, indicator light can also be adopted as the indication unit 18, wherein the indicator light, together with the alarm unit 15, may be integrated into red and green indicator light of the elevator. When receiving a third detection signal (that is to say, the elevator is about to run), the red and green indicator light reminds user not to get close to the elevator, so as to avoid elevator-related accident.

In a preferred embodiment of the present invention, as shown in the Figure 1, the third detection unit 14 further comprises:
a self-learning module 142, connected to the control module 141 for self-learning to generate the first distance threshold value and being predetermined in the control module 141 during the process of the elevator running several times after the initial installation of the multi-functional elevator light curtain; and
during the process of the elevator running several times after the initial installation of the multi-functional elevator light curtain, the third detection unit 14 stops transmitting the third detection signal to the control system.

Specifically, in the present embodiment, when the distance detection device is installed to a different elevator, the installation positions thereof cannot be completely the same, so the first distance threshold value in the control module 141 is not necessarily the same when the distance detection device is installed to a different elevator. Therefore, during the actual installation, the function of transmitting the third detection signal from the third detection unit 14 should be temporarily closed after the multi-functional elevator light curtain is installed to the elevator, at the moment the operation of the elevator is controlled in a conventional controlling mode, that is to say, it is determined to have the elevator running observing whether the mechanical locking hook is connect in place. During the initial running of the elevator, it is necessary to "memorize" the distance between the elevator car doors 22 by the self-learning function of the self-learning module 142, and perform comprehensively analyze and organize a plurality of distances recorded, thereby obtaining a first distance threshold value suitable for the currently installed elevator, and predetermining the first distance threshold value in the control module 141. Then the third detection unit 14 starts running.

In the technical solution of the present invention, the detection function of the 2D plane area and the detection function of the 3D stereoscopic area (the detection area in front of the elevator car doors) are integrated in the multi-function elevator light curtain, whereby the object detection in a plurality of detection areas can be achieved, to avoid accidents in the elevator. At the same time, distance detection is used to assist the elevator control system, to avoid elevator malfunction when the mechanical locking hook fails, and enhance safety with respect to the opening, closing and running of an elevator.

The foregoing is only the preferred embodiments of the invention, not thus limiting embodiments and scope of the invention, those skilled in the art should be able to realize that the schemes obtained from the content of specification and figures of the invention are within the scope of the invention.

## Claims

1. A multi-functional elevator light curtain applicable for elevator, comprising an elevator car and two elevator car doors provided in front of the elevator car, the elevator is also connected to a control system for controlling said elevator car doors to open or to close according to the control signal, transmitted by the elevator car doors, showing whether the elevator car doors are closed; wherein the multi-functional elevator light curtain comprises a receiver and a transmitter mounted on opposite side of the elevator car doors respectively, wherein the receiver covers one side of one of the elevator car doors, and the transmitter covers one side of other of the elevator car doors, the receiver is configured to be opposite to the transmitter, the multi-functional elevator light curtain further comprises:
a first detection unit, for detecting whether an object blocks a gap between the elevator car doors, and outputting a first detection signal when the object blocks the gap;
said first detection unit further comprises 40 first infrared detection devices, each first infrared detection device respectively comprises a first infrared emitting tube provided in the transmitter, and a first infrared receiving tube provided in the receiver, the first infrared emitting tube continuously emits an infrared light beam towards the first infrared receiving tube;
in the first detection unit, when the first infrared receiving tube of one of the first infrared detection devices does not receive the infrared light beam, the first detection unit outputs the first detection signal;
a second detection unit, for detecting whether an object blocks an detection area in front of the elevator car doors, and outputting a second detection signal when the object blocks the detection area;
said second detection unit further comprises a plurality of second infrared detection devices, each second infrared detection device respectively comprises a second infrared emitting tube provided in the transmitter, and a second infrared receiving tube provided in the receiver, the second infrared emitting tube and the second infrared receiving tube are arranged at a predetermined angle with respect to a plane of the elevator car doors respectively, and the second infrared emitting tube continuously emits the infrared light beam towards the detection area;
in the second detection unit, when the second infrared receiving tubes of one of the second infrared detection devices receives the infrared light beam, the second detection unit outputs the second detection signal;
an elevator car control unit connected to the first detection unit and the second detection unit respectively, when the first detection signal or the second detection signal is received by the elevator car control unit, the elevator car control unit controls the elevator car door to keep the elevator car door open;
a third detection unit connected to the control system for detecting a distance between the elevator car doors in real time, and outputting a third detection signal when the distance is less than a first distance threshold value;
the third detection unit further comprises:
a pair of distance detection devices respectively mounted on the transmitter and receiver, a pair of bottom configurations between the distance detection devices parallel to the elevator car, and the pair of distance detection devices continuously detects the distance between the two elevator car doors and outputs a corresponding distance detection value;
a control module connected to the distance detection device, the first distance threshold value is predetermined in the control module, wherein the control module is used for comparing the distance detection value with the first distance threshold value, and outputting a first comparison result;
according to the first comparative result, the third detection unit transmits the third detection signal to the control system when the distance detection value is less than the first distance threshold value;
when receiving the control signal indicating the elevator car doors have been closed and receiving the third detection signal, the control system control the elevator to start running.

2. The multi-functional elevator light curtain according to claim 1, wherein the first infrared emitting tube in each of the first infrared detection devices and the second infrared emitting tube in the corresponding second infrared detection device are integrated into the transmitter; and
the first infrared receiving tube in each of the first infrared detection devices and the second infrared receiving tube in the corresponding second infrared detection device are integrated into the receiver.

3. The multi-functional elevator light curtain according to claim 1 or 2, wherein the first infrared emitting tube and the second infrared emitting tube are mounted in the transmitter by a PCB board, and
the first infrared receiving tube and the second infrared receiving tube are mounted in the receiver by a PCB board.

4. The multi-functional elevator light curtain according to claim 1, wherein the predetermined angle is 45 degrees.

5. The multi-functional elevator light curtain according to claim 1, wherein the first infrared emitting tube in each of the first infrared detection devices emits the infrared light beam towards the corresponding first infrared receiving tube at a predetermined scan period;
within the predetermined scan period, the first infrared emitting tube continuously emits five infrared light beams.

6. The multi-functional elevator light curtain according to claim 1, wherein the second detection unit comprises 18 second infrared detection devices.

7. The multi-functional elevator light curtain according to claim 6, wherein two of the second infrared emitting tubes located in the upper portion of the transmitter emit an infrared light beam obliquely downward towards the detection area;
the 14 second infrared emitting tubes located in the central part of the transmitter emit the infrared light beams horizontally towards the detection area; and
the two second infrared emitting tubes located in the lower portion of the transmitter emit the infrared light beams obliquely upward towards said detection area.

8. The multi-functional elevator light curtain according to claim 1, further comprising:
an alarm unit, respectively connected to the first detection unit and the second detection unit, and the alarm unit is used for outputting an alarm signal after receiving the first detection signal or the second detection signal.

9. The multi-functional elevator light curtain of claim 8, wherein the alarm unit comprises indicator lights provided in the transmitter and receiver respectively;
the indicator light is illuminated by red light when the alarm unit receives the first detection signal or the second detection signal.

10. The multi-functional elevator light curtain according to claim 1, further comprising:
a detection control unit connected to the second detection unit and the third detection unit respectively;
a second distance threshold value is also predetermined in the control module of the third detection unit, wherein the control module is used for comparing the distance detection value with the second distance threshold value and outputting a second comparison result, and based on the second comparison result, the third detection unit sends a shutdown signal to the detection control unit when the distance detection value is less than the second distance threshold value;
wherein the detection control unit controls the second detection unit to stop running according to the shutdown signal;
wherein the second distance threshold value is greater than the first distance threshold value.

11. The multi-functional elevator light curtain according to claim 10, wherein a distance threshold range is also predetermined in the control module of the third detection unit, wherein the control module is used for comparing the distance detection value with the distance threshold range and outputting a third comparison result;
based on the third comparison result, the detection control unit controls the second detection unit to operate when the distance detection value is within the distance threshold range.

12. The multi-functional elevator light curtain according to claim 1, further comprising:
a delay reset unit connected to the second detection unit; and
a timer configured in the delay reset unit, and timing begins when the second detection unit outputs the second detection signal, and after a predetermined period of time is passed, said delay reset unit controls the second detection unit to stop running.

13. The multi-functional elevator light curtain according to claim 1, wherein the third detection unit and the control system are wirelessly connected via Bluetooth.

14. The multi-functional elevator light curtain according to claim 1, further comprising:
a indicating unit connected to the third detection unit, for illuminating by the red light after receiving the third detecting signal.

15. The multi-functional elevator light curtain according to claim 1, wherein said third detection unit further comprises:
a self-learning module connected to the control module for self-learning to generate the first distance threshold value and being predetermined in the control module during the process of a plurality of elevator operations after the initial installation of the multi-functional elevator light curtain;
during the process of the elevator running several times after the initial installation of the multi-functional elevator light curtain, the third detection unit stops transmitting the third detection signal to the control system.
